# EUROPEAN PATENT APPLICATION

(11) **EP 1 191 198 A2**
(43) Date of publication of application: **27.03.2002**
(21) Application number: 01122460.7
(22) Date of filing: 20.09.2001
(51) Int. Cl.: F02B 23/10, F02B 17/00

(54) **Internal combustion center injection type engine and method for injecting fuel in an internal combustion center injection type engine**

(30) Priority: 20.09.2000 JP 2000385382
(71) Applicant: YAMAHA HATSUDOKI KABUSHIKI KAISHA, Iwata-shi Shizuoka-ken (JP)
(72) Inventor: Mori, Kenji, c/o Yamaha Hatsudoki Kabushiki Kaisha, Iwata-shi, Shizuoka-ken (JP); Takabayashi, Hideaki, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

Internal combustion center injection type engine and method for injecting fuel in an internal combustion center injection type engine, especially a multiple valve engine, with at least one combustion chamber (S), a piston (14) and an injector (18) which is provided for injecting fuel spray towards a central portion of an upper surface (14a) of said piston (14), said fuel spray impinges a restricted surface (14a₃), which is formed in the central portion of the upper surface (14a) of the piston (14), and said fuel spray spreads substantially laterally with regard to a fuel injection direction.

## Description

This invention relates to an internal combustion center injection type engine and to a method for injecting fuel in an internal combustion center injection type engine, especially to such an engine having an improvement in the shape of the upper surface of a piston defining a combustion chamber.

A related art internal combustion injection engine of this kind is formed so as to improve the fuel consumption and exhaust gas characteristics by lean combustion made possible by injecting fuel from an injector directly into a combustion chamber.

In order to carry out uniform combustion in a high-speed engine mounted on a motorcycle, etc., it is necessary in order to secure the time needed to gasify the fuel and mix the fuel with the air that a fuel be injected in the initial stage of a suction stroke both when the engine is a side-injection type engine and when the engine is a center-injection type engine. In this case it is difficult to inject fuel with a timing which prevents the fuel spray from impinging upon the piston.

As a result, the fuel spray impinges upon the upper surface of the piston, and is turned into a liquid film on the same upper surface. This causes the gasification time to be delayed greatly or makes the gasification of a fuel impossible. Consequently, the deterioration of combustion and in its turn an increase in the fuel consumption and an increase in hydrocarbon exhaust discharge occur.

This tendency is noticeable since the absolute time between an end of a fuel injection operation and the ignition of the gaseous mixture becomes shorter as engine speed increases. This poses a big problem in a high-speed engine.

The methods of solving this problem include a method of delaying the injection time to a moment at which the fuel spray does not impinge upon a piston. In this case, the time for gasifying a fuel and mixing the fuel with the air becomes short, so that it is necessary to reduce the time needed to carry out the gasification and mixing operations. The methods conceivable as methods of satisfying the requirements include
(1) a method of reinforcing flow of the air in the cylinder,
(2) a method of atomizing the fuel spray from an injector, and
(3) a method of increasing rate of injection of fuel from the injector and thereby finish the injection operation in a short time.

However, since the method (1) requires passage narrowing, a variable mechanism and a supercharger become necessary so as to secure the quantity of the air when a rotational frequency and a load are high, so that this method is difficult to practice. The methods (2), (3) require that the atomization of fuel spray and the increasing of injection rate (injection quantity per unit time) are at odds with each other, i.e., these methods have contradictory demands for an injector. Therefore, these methods are difficult to practice.

It is an objective of the present invention to provide an internal combustion center injection type engine and a method for injecting fuel in an internal combustion center injection type engine, wherein the fuel combustion is improved.

According to the apparatus aspect of the present invention, said objective is solved by an internal combustion center injection type engine, especially a multiple valve engine, with at least one combustion chamber defined by a cylinder bore, a cylinder head and a piston which is slidingly movable in said cylinder bore, an injector is provided on said cylinder head for injecting fuel towards a central portion of an upper surface of said piston, wherein a restricted surface for impinging a fuel spray is formed in the central portion of the upper surface of the piston.

According to a preferred embodiment, said restricted surface in the central portion of the upper surface of the piston is formed in such a manner that the fuel is injected from an injection port of the injector to the restricted surface when the piston is in the vicinity of the upper dead point of a suction stroke.

According to a preferred embodiment, said restricted surface in the central portion of the upper surface of the piston is provided close to the injection port of the injector when the piston is in the vicinity of the upper dead point of a suction stroke, especially such that a fuel spray which impinges said restricted surface spreads laterally with regard to a fuel injection direction.

In the internal combustion center injection type engine according to a preferred embodiment, said cylinder head is provided with suction valves and exhaust valves opened to the combustion chamber, and the cylinder head, which is an upper surface of the combustion chamber, is provided with an ignition plug and said injector, wherein said ignition plug and said injector are provided substantially at a center of the upper surface of the combustion chamber formed by the cylinder head.

According to a preferred embodiment, the central portion of the upper surface of the piston is provided with an upwardly extending projection, and said restricted surface is formed on this projection.

Preferably, said restricted surface is a recess, especially concave shaped, and a circumferential edge is formed around said recess.

According to a preferred embodiment, said engine is a multiple valve engine, with at least two, especially three, suction valves and two exhaust valves per combustion chamber.

According to the method aspect of the present invention, said objective is solved by a method for injecting fuel in an internal combustion center injection type engine, especially an internal combustion center injection type engine according to at least one of the claims 1 to 7, with at least one combustion chamber defined by a cylinder bore, a cylinder head and a piston which is slidingly movable in said cylinder bore between an upper dead point and an lower dead point of the piston, wherein fuel is injected towards a central portion of an upper surface of said piston, and a fuel spray which is injected in the vicinity of the upper dead point of a suction stroke, impinges a restricted surface, which is formed in the central portion of the upper surface of the piston, and said fuel spray spreads substantially laterally with regard to a fuel injection direction.

Preferably, a deposition of fuel on the upper surface of the piston is restricted on the restricted surface which is formed in the central portion of the upper surface of the piston.

The method for injecting fuel in an internal combustion center injection type engine according to a preferred embodiment comprises a fuel spray which is injected into the combustion chamber with the piston being outside of the vicinity of the upper dead point of a suction stroke does not impinge said restricted surface which is formed in the central portion of the upper surface of the piston.

According to a preferred embodiment, under high speed operation condition of the engine fuel injection starts with the piston being in the vicinity of the upper dead point of a suction stroke, and under low speed operation condition of the engine fuel injection starts with the piston being outside of the vicinity of the upper dead point of a suction stroke.

It is an advantage of the present invention to provide an internal combustion center injection type engine and to a method for injecting fuel in an internal combustion center injection type engine adapted to minimize the deposition of fuel spray on an upper surface of a piston, and promote the atomization of fuel.

Preferred embodiments of the present invention are laid down in the dependent claims.

In the following, the present invention is explained in greater detail with respect to several embodiments thereof in conjunction with the accompanying drawings, wherein:
- Fig. 1: is a plan view of a piston in the mode 1 of embodiment;
- Fig. 2: is a sectional view, which corresponds to a drawing taken along the line A-A in Fig. 1, of the same mode 1 of embodiment;
- Fig. 3: is sectional view, which corresponds to a drawing taken along the line B-B in Fig. 1, of the same mode 1 of embodiment, wherein Fig. 3A shows the embodiment in which a crank angle is 360° BTDC, and Fig. 3B the embodiment in which a crank angle is 340° BTDC;
- Fig. 4: is a sectional view, which corresponds to a drawing taken along the line B-B in Fig. 1, of the same mode 1 of embodiment, wherein Fig. 4A shows the embodiment in which a crank angle is 320° BTDC, and Fig. 4B the embodiment in which a crank angle is 300° BTDC;
- Fig. 5: is a graph showing injection time with respect to every engine speed in the same mode 1 of embodiment;
- Fig. 6: is a perspective view showing an upper surface of a piston in the same model of embodiment, wherein Fig. 6A shows a recess- and projection-carrying piston 1, and Fig. 6B a recess- and projection-carrying piston 2;
- Fig. 7: is a graph showing the relation between mixing ratio and engine torque, fuel consumption and THC in the same mode 1 of embodiment in comparison with similar relation in a related art engine of this kind;
- Fig. 8: is a sectional view, which corresponds to Fig. 2, showing a mode 2 of embodiment;
- Fig. 9: is a sectional view, which corresponds to Fig. 3, of the same mode 2 of embodiment, wherein Fig. 9A shows the condition in which a crank angle is 360° BTDC, and Fig. 9B the condition in which a crank angle is 340° BTDC;
- Fig. 10: is a sectional view, which corresponds to Fig. 4, of the same mode 2 of embodiment, wherein Fig. 10A shows the condition in which a crank angle is 320° BTDC, and Fig. 10B the condition in which a crank angle is 300° BTDC;
- Fig. 11: is a plan view, which corresponds to Fig. 1, of a piston in the mode 3 of embodiment;
- Fig. 12: is a sectional view, which corresponds to Fig. 2, of the same mode 3 of embodiment;
- Fig. 13: is a sectional view, which corresponds to Fig. 3, of the same mode 2 of embodiment, wherein Fig. 13A shows the condition in which a crank angle is 360° BTDC, and Fig. 13B the condition in which a crank angle is 340° BTDC; and
- Fig. 14: is a sectional view, which corresponds to Fig. 4, of the same mode 2 of embodiment, wherein Fig. 14A shows the condition in which a crank angle is 320° BTDC, and Fig. 14B the condition in which a crank angle is 300° BTDC.

### Mode 1 of Embodiment

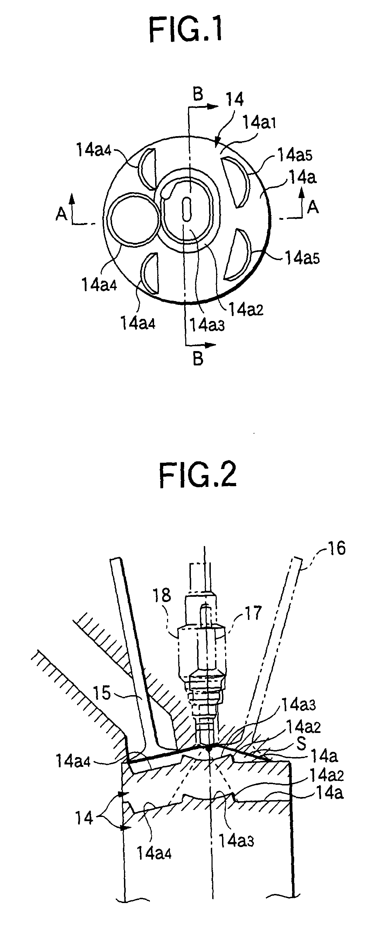

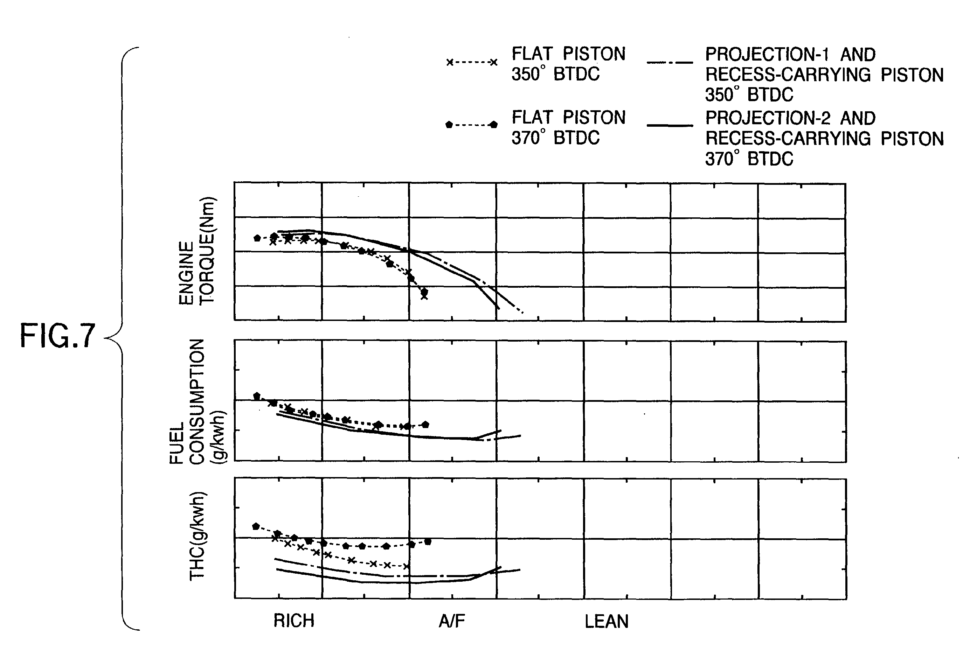

Fig. 1 to Fig. 7 show a mode 1 of an embodiment.

The construction will now be described first. Referring to the drawings, a reference numeral 11 denotes a 4-cycle, 5-valve internal combustion injection engine, and a cylinder head 13 is fastened to a cylinder block 12 by head bolts (not shown).

A piston 14 is vertically slidably inserted in a cylinder bore 12a of the cylinder block 12, and connected to a crankshaft via a connecting rod (not shown).

A combustion chamber S is formed by the upper surface 14a of this piston 14, cylinder bore 12a and cylinder head 13. The outside air is introduced into this combustion chamber S via three suction valves 15 provided in the cylinder head 13, and a combustion gas is discharged from this combustion chamber S via two exhaust valves 16. These valves 15, 16 are formed so that the valves are operated by a cam rotated synchronously with a crankshaft and opened and closed with predetermined timing.

The cylinder head 13 is provided therein with an ignition plug 17 so that an electrode portion 17a thereof projects from a substantially central position of the upper surface of the combustion chamber S, and an injector 18 is provided adjacently to this ignition plug 17, an injection port 18a of the injector 18 being opened in a substantially central position on the upper surface of the combustion chamber S.

The upper surface 14a of the piston upon which fuel injected from the injection port 18a impinges is provided at its central portion with a projection 14a₂ extending upward from a flat circumferential general surface 14a₁. This projection 14a₂ is provided with a slightly sunken substantially concave recess 14a₃. Around the projection 14a₂, run-off recesses 14a₄ for the suction valve 15 and run-off recesses 14a₅ for the exhaust valve 16 are formed as shown in Fig. 1.

The time at which the fuel is injected from the injection port 18a of the injector 18 into this recess 14a₃ is set to a moment at which the piston reaches the vicinity of the upper dead point (including a position before the upper dead point) of a suction stroke.

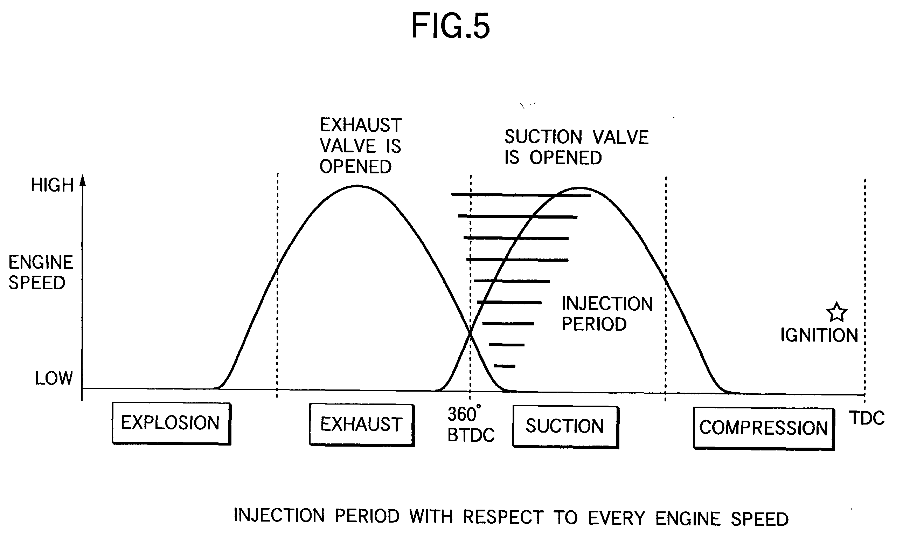

In this connection, Fig. 5 shows fuel injection period timing. As an engine speed increases, the injection starting time becomes earlier. Especially, in a high-speed engine, such as an engine for a motorcycle, the injection of a fuel is conducted when the piston is in the vicinity of an upper dead point of a suction stroke.

The operation will now be described.

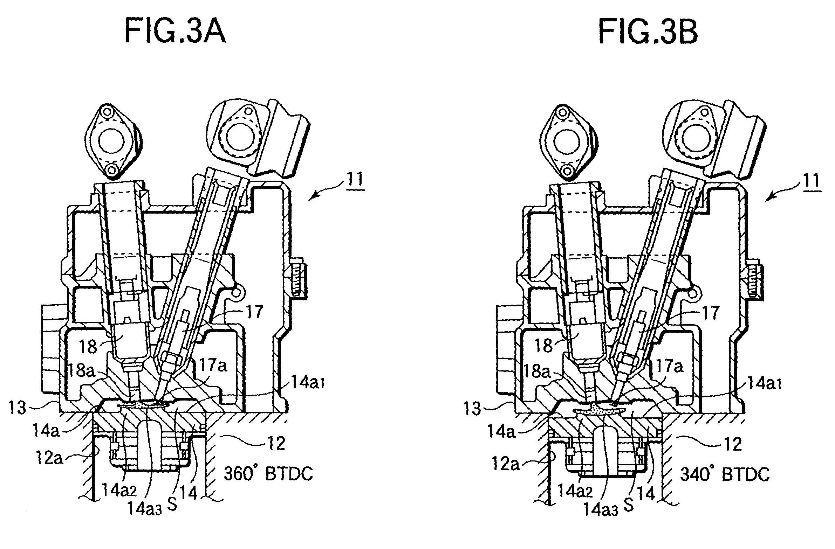

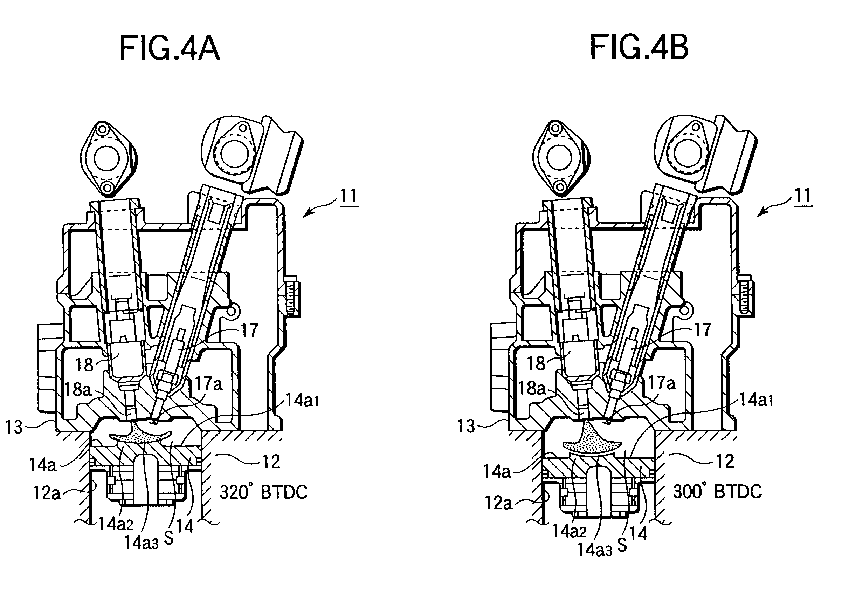

When fuel spray is injected from the injection port 18a of the injector 18 toward the recess 14a₃ of the upper surface 14a of the piston when the piston is in the vicinity of the upper dead point of a suction stroke, the fuel spray impinges upon the bottom surface of the recess 14a₃, spreads laterally and flows so as to spring up slightly from a circumferential edge of the recess 14a₃. Fig. 3A shows the condition of the fuel spray observed when the injection starting timing is 360° BTDC (the upper dead point of a suction stroke), Fig. 3B the condition of the fuel spray observed when the injection starting time is 340° BTDC (a position after an upper dead point of a suction stroke), and Fig. 4A the condition of the fuel spray observed when the injection starting time is 320° BTDC.

For the above-mentioned reason, the uniform deposition of the fuel spray on the whole of the upper surface 14a of the piston can be prevented, and the atomization of the fuel spray is promoted at the same time. This enables a large engine torque to be obtained even when a fuel is lean, the fuel consumption to be improved and the total hydrocarbon (TCH) content of exhaust gas to be reduced.

Especially, when the projection 14a₂ is formed as in this mode of embodiment, a distance between the injection port 18a of the injector 18 and the upper surface of the piston can be reduced. Therefore, the fuel spray is atomized easily, and the fuel injection time can be delayed correspondingly, so that the blow-by of the fuel can be held down. Namely, when the piston is in a position in the vicinity of the upper dead point of a suction stroke, a period of time during which both the suction valve 15 and exhaust valve 16 are opened exists, so that there is the possibility that the fuel spray blows through the exhaust valve. However, the blow-by of the fuel spray can be restrained by delaying the injection time. Moreover, owing to the formation of the projection 14a₂, compression ratio can be set large.

When the injection is started when the piston is in a position of 300° BTDC which is away from the upper dead point of a suction stroke, the fuel spray does not impinge upon the upper surface 14a of the piston as shown in Fig. 4B, and, accordingly, a problem of the deposition of fuel spray does not arise.

A description will now be given on the basis of the results of experiments.

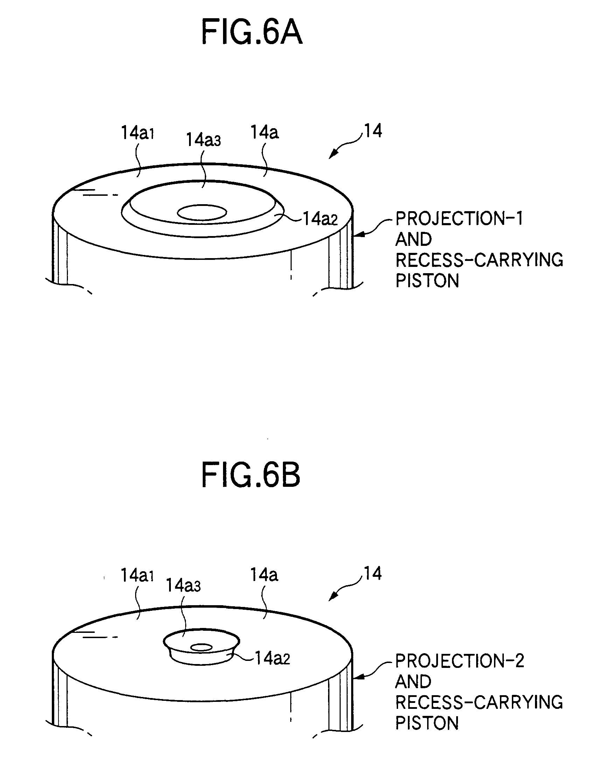

Experiments for determining variations of values of the engine torque, fuel consumption and THC were conducted by using two recess- and projection-carrying pistons 1, 2 (refer to Fig. 6) according to the embodiments having different sizes of projections 14a₂ and recesses 14a₃ and a related art flat piston having a flat upper surface with an engine speed set to 9000 rpm and a mixing ratio (A/F) of the fuel varied. In Fig. 6, the run-off recesses 14a₄, 14a₅ for the valves are omitted.

The injection time for the recess- and projection-carrying piston 1 is 350° BTDC, for the recess- and projection-carrying piston 2 370° BTDC, and for the flat pistons 350° BTDC and 370° BTDC. In practice, the injection is started 27° after these injection starting moments.

According to the above, it is understood that the use of the recess- and projection-carrying pistons 1, 2 according to the embodiments causes the engine torque to become higher, the fuel consumption to become lower, and a total hydrocarbon (TCH) content of exhaust gas to become lower than the use of the flat piston even when the fuel is lean.

The projections of the recess- and projection-carrying pistons 1, 2 according to the embodiments are designed depending on an injector's spray corner, especially the area on which the fuel spray impinges, and the control effect of fuel sticking. A big projection is required when a spray corner is big, and it enlarges fuel sticking extent.

Moreover, the recess- and projection-carrying pistons 1, 2 according to the embodiments are designed depending on the heat load in the part of projection and the control effect of fuel sticking. The control effect of fuel sticking is more effective when the projection comprises some overhanging part. However, such overhanging part tends to become a heat spot. Thus, such overhanging part is restricted in view of said requirements.

### Mode 2 of Embodiment

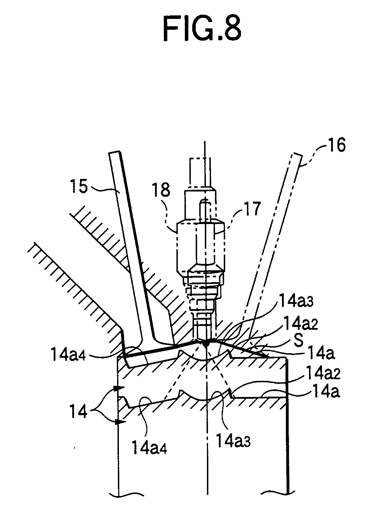

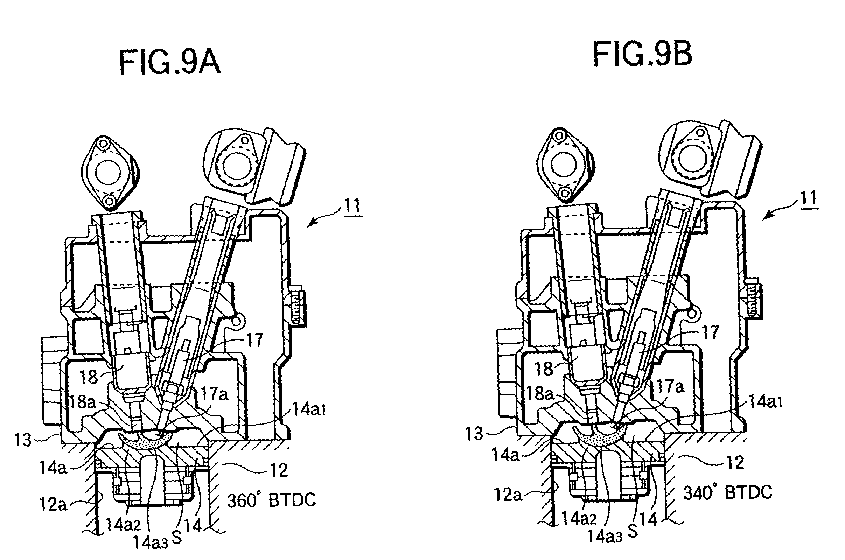

Fig. 8 to Fig. 10 show a mode 2 of embodiment.

In this mode 2 of embodiment, a recess 14a₃ in a projection 14a₂ of a piston 14 is formed more deeply than the corresponding recess in the mode 1 of embodiment.

According to the mode 2 of embodiment, the power of the springing up of the fuel spray becomes large, and the degree of atomization of fuel spray is further raised.

Since the construction and operation of the other portions of this mode of embodiment are identical with those of the mode 1 of embodiment, the descriptions thereof will be omitted.

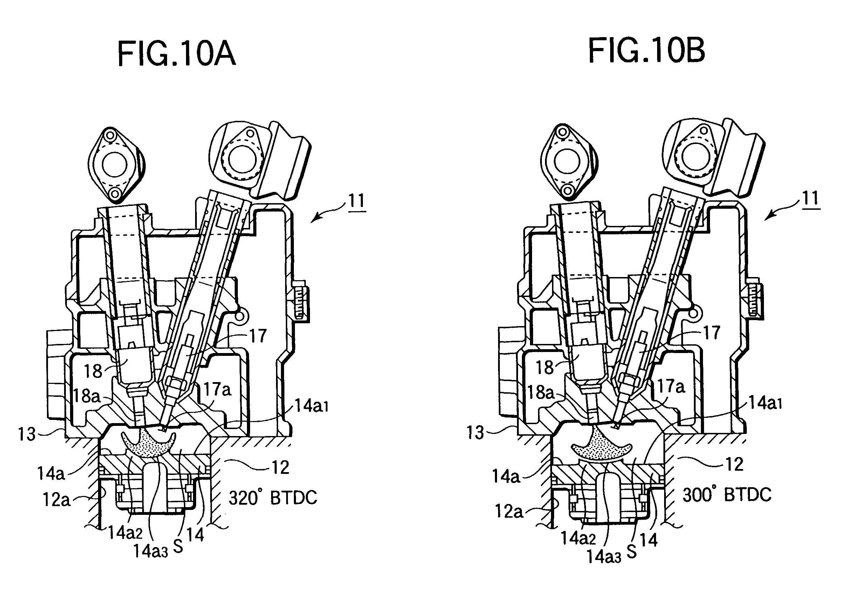

When the fuel injection is started at a moment at which a piston is in a position of 300° BTDC which is away from the upper dead point of a suction stroke, the fuel spray does not impinge upon an upper surface 14a of the piston as shown in Fig. 10B, so that a problem of the deposition of the fuel spray does not occur.

### Mode 3 of Embodiment

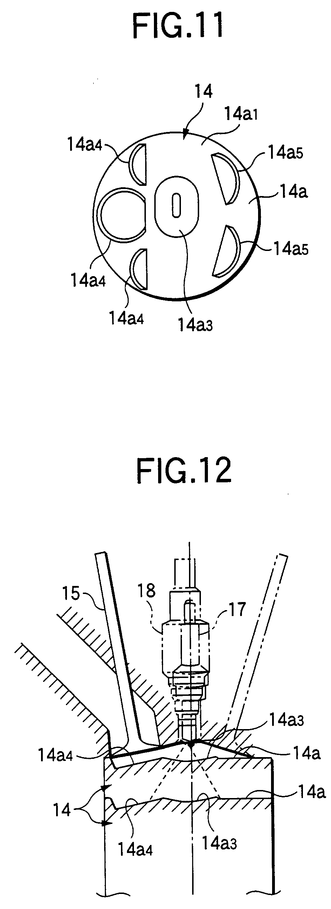

Fig. 11 to Fig. 14 show a mode 3 of embodiment.

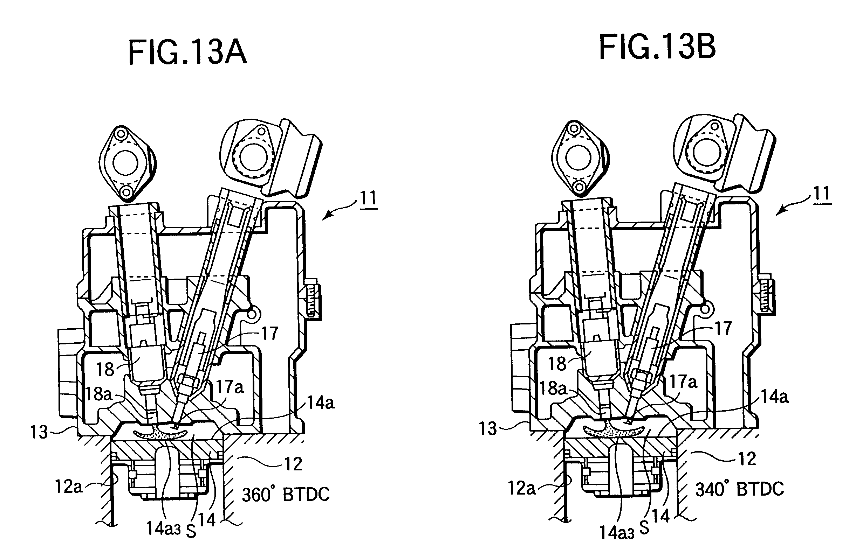

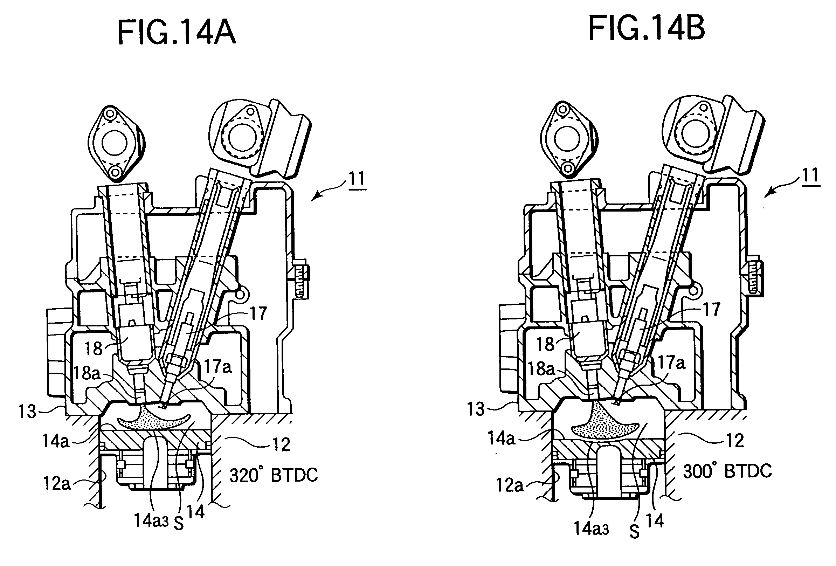

In this mode 3 of embodiment, a projection 14a₂ is not formed on an upper surface 14a of a piston 14 but a recess 14a₃ only is formed. Said recess 14a₃ is clearly shown on the Figs. 11, 12, and 14B. The Figs. 13A, 13B and 14A are relating to the same teaching. However, for simplifying said Figs. 13A, 13B and 14A, which are directed to different piston positions and the related behavior of the injected fuel, said recess 14a₃ is not explicitly illustrated in said figures.

Even when this structure is employed, the deposition of the fuel spray on the upper surface 14a of the piston is also held down, and the atomization of the fuel spray is also promoted. This enables an increase in the engine torque and a decrease in the fuel consumption and discharge rate of HC to be attained.

When the fuel injection is started at a moment at which a piston is in a position of 300° BTDC which is away from the upper dead point of a suction stroke, the fuel spray does not impinge upon an upper surface 14a of the piston as shown in Fig. 14B, so that a problem of the deposition of the fuel spray does not occur.

An internal combustion center injection type engine according to the embodiments comprises a combustion chamber S, which is formed from the upper portion of a cylinder bore 12a in which a piston 14 is slidingly moved in a cylinder block 12 and a cylinder head 13. The cylinder head 13 is provided therein with suction valves 15 and exhaust valves 16 opened to the combustion chamber S. The cylinder head 13, which is the upper surface of the combustion chamber S, is provided with an ignition plug 17 and an injector 18 at its center. The engine is constructed by forming a recess 14a₃ in the central portion of the upper surface 14a of a piston 14, in such a manner that a fuel is injected from the injection port 18a of an injector 18 to the recess 14a₃ when the piston 14 is in the vicinity of the upper dead point of a suction stroke.

According to some of the embodiments, the central portion of the upper surface 14a of the piston 14 is provided with an upwardly extending projection 14a₂, the mentioned recess 14a₃ being formed in this projection (14a₂).

The embodiments described above are teaching an internal combustion center injection type engine, especially a multiple valve engine, with at least one combustion chamber S defined by a cylinder bore 12a, a cylinder head 13 and a piston (14) which is slidingly movable in said cylinder bore 12a. An injector 18 is provided on said cylinder head 13 for injecting fuel towards a central portion of an upper surface 14a of said piston 14, wherein a restricted surface 14a₃ for impinging a fuel spray is formed in the central portion of the upper surface 14a of the piston 14.

According to the embodiments, said restricted surface 14a₃ in the central portion of the upper surface 14a of the piston 14 is formed in such a manner that the fuel is injected from an injection port 18a of the injector 18 to the restricted surface 14a₃ when the piston 14 is in the vicinity of the upper dead point (BTDC) of a suction stroke. Said restricted surface 14a₃ in the central portion of the upper surface 14a of the piston 14 is provided close to the injection port 18a of the injector 18 when the piston 14 is in the vicinity of the upper dead point (BTDC) of a suction stroke, such that a fuel spray which impinges said restricted surface 14a₃ spreads laterally with regard to a fuel injection direction.

According to the embodiments, said cylinder head 13 is provided with suction valves 15 and exhaust valves 16 opened to the combustion chamber S. The cylinder head 13, which is an upper surface of the combustion chamber S, is provided with an ignition plug 17 and said injector 18. Said ignition plug 17 and said injector 18 are provided substantially at a center of the upper surface of the combustion chamber S formed by the cylinder head 13.

According to some embodiments described above, the central portion of the upper surface 14a of the piston 14 is provided with an upwardly extending projection 14a₂, and said restricted surface 14a₃ is formed on this projection 14a₂.

According to embodiments described above, said restricted surface is a recess 14a₃, especially concave shaped, and a circumferential edge is formed around said recess 14a₃.

The embodiments described above are teaching an internal combustion center injection type engine, wherein said engine is a multiple valve engine, with at least two, especially three, suction valves 15 and two exhaust valves per combustion chamber S.

The embodiments described above are teaching a method for injecting fuel in an internal combustion center injection type engine, with at least one combustion chamber S defined by a cylinder bore 12a, a cylinder head 13 and a piston 14 which is slidingly movable in said cylinder bore 12a between an upper dead point (BTDC) and an lower dead point of the piston 14. Fuel is injected towards a central portion of an upper surface 14a of said piston 14. A fuel spray which is injected in the vicinity of the upper dead point (BTDC) of a suction stroke, impinges a restricted surface 14a₃, which is formed in the central portion of the upper surface 14a of the piston 14. Said fuel spray spreads substantially laterally with regard to a fuel injection direction. An deposition of fuel on the upper surface 14a of the piston 14 is restricted on the restricted surface 14a₃ which is formed in the central portion of the upper surface 14a of the piston 14.

A fuel spray which is injected into the combustion chamber S with the piston 14 being outside of the vicinity of the upper dead point (BTDC) of a suction stroke does not impinge said restricted surface 14a₃ which is formed in the central portion of the upper surface 14a of the piston 14.

According to the method for injecting fuel in an internal combustion center injection type engine, under high speed operation condition of the engine fuel injection starts with the piston 14 being in the vicinity of the upper dead point (BTDC) of a suction stroke. Under low speed operation condition of the engine fuel injection starts with the piston 14 being outside of the vicinity of the upper dead point (BTDC) of a suction stroke.

According to the embodiments described above, the internal combustion center injection type engine is formed so that the engine has a recess in the center portion of an upper surface of a piston, into which recess a fuel is injected from an injection port of an injector when a piston is in the vicinity of the upper dead point of a suction stroke. Therefore, the fuel spray impinges upon the surface of the recess and is sprung up. This enables the deposition of the fuel spray on the upper surface of the piston to be held down, and the atomization of fuel spray to be promoted. As a result, an increase in the engine torque and a decrease in the fuel consumption and the discharge rate of HC can be attained.

Furthermore, according to the embodiments described above, the internal combustion center injection type engine has a projection extending upward from the portion of the upper surface of a piston which is in the vicinity of a central portion thereof, and a recess is in this projection. Therefore, the injection port of an injector and the recess can be brought close to each other, and the fuel spray can be atomized easily. This enables the moment at which the fuel injection is started to be delayed to when the piston is in the vicinity of the upper dead point of a suction stroke, by which the blow-by of the fuel at the valve-overlapping time to be held down, and further the compression ratio in the combustion chamber is increased owing to the projection.

## Claims

1. Internal combustion center injection type engine, especially a multiple valve engine, with at least one combustion chamber (S) defined by a cylinder bore (12a), a cylinder head (13) and a piston (14) which is slidingly movable in said cylinder bore (12a), an injector (18) is provided on said cylinder head (13) for injecting fuel towards a central portion of an upper surface (14a) of said piston (14), wherein a restricted surface (14a₃) for impinging a fuel spray is formed in the central portion of the upper surface (14a) of the piston (14).

2. Internal combustion center injection type engine according to claim 1, **characterized in that** said restricted surface (14a₃) in the central portion of the upper surface (14a) of the piston (14) is formed in such a manner that the fuel is injected from an injection port (18a) of the injector (18) to the restricted surface (14a₃) when the piston (14) is in the vicinity of the upper dead point (BTDC) of a suction stroke.

3. Internal combustion center injection type engine according to claim 1 or 2, **characterized in that** said restricted surface (14a₃) in the central portion of the upper surface (14a) of the piston (14) is provided close to the injection port (18a) of the injector (18) when the piston (14) is in the vicinity of the upper dead point (BTDC) of a suction stroke, especially such that a fuel spray which impinges said restricted surface (14a₃) spreads laterally with regard to a fuel injection direction.

4. Internal combustion center injection type engine according to at least one of the claims 1 to 3, **characterized in that** said cylinder head (13) is provided with suction valves (15) and exhaust valves (16) opened to the combustion chamber (S), and the cylinder head (13), which is an upper surface of the combustion chamber (S), is provided with an ignition plug (17) and said injector (18), wherein said ignition plug (17) and said injector (18) are provided substantially at a center of the upper surface of the combustion chamber (S) formed by the cylinder head (13).

5. Internal combustion center injection type engine according to at least one of the claims 1 to 4, **characterized in that** the central portion of the upper surface (14a) of the piston (14) is provided with an upwardly extending projection (14a₂), and said restricted surface (14a₃) is formed on this projection (14a₂).

6. Internal combustion center injection type engine according to at least one of the claims 1 to 5, **characterized in that** said restricted surface is a recess (14a₃), especially concave shaped, and a circumferential edge is formed around said recess (14a₃).

7. Internal combustion center injection type engine according to at least one of the claims 1 to 6, **characterized in that** said engine is a multiple valve engine, with at least two, especially three, suction valves (15) and two exhaust valves per combustion chamber (S).

8. Method for injecting fuel in an internal combustion center injection type engine, especially an internal combustion center injection type engine according to at least one of the claims 1 to 7, with at least one combustion chamber (S) defined by a cylinder bore (12a), a cylinder head (13) and a piston (14) which is slidingly movable in said cylinder bore (12a) between an upper dead point (BTDC) and an lower dead point of the piston (14), wherein fuel is injected towards a central portion of an upper surface (14a) of said piston (14), and a fuel spray which is injected in the vicinity of the upper dead point (BTDC) of a suction stroke, impinges a restricted surface (14a₃), which is formed in the central portion of the upper surface (14a) of the piston (14), and said fuel spray spreads substantially laterally with regard to a fuel injection direction.

9. Method for injecting fuel in an internal combustion center injection type engine according to claim 8, **characterized in that** an deposition of fuel on the upper surface (14a) of the piston (14) is restricted on the restricted surface (14a₃) which is formed in the central portion of the upper surface (14a) of the piston (14).

10. Method for injecting fuel in an internal combustion center injection type engine according to claim 8 or 9, **characterized by** a fuel spray which is injected into the combustion chamber (S) with the piston (14) being outside of the vicinity of the upper dead point (BTDC) of a suction stroke does not impinge said restricted surface (14a₃) which is formed in the central portion of the upper surface (14a) of the piston (14).

11. Method for injecting fuel in an internal combustion center injection type engine according to at least one of the claims 8 to 10, **characterized in that** under high speed operation condition of the engine fuel injection starts with the piston (14) being in the vicinity of the upper dead point (BTDC) of a suction stroke, and under low speed operation condition of the engine fuel injection starts with the piston (14) being outside of the vicinity of the upper dead point (BTDC) of a suction stroke.
